# EUROPÄISCHE PATENTSCHRIFT

(11) **EP 0 700 934 B1**
(45) Veröffentlichungstag und Bekanntmachung des Hinweises auf die Patenterteilung: **07.01.1998**
(21) Anmeldenummer: 95113436.0
(22) Anmeldetag: 26.08.1995
(51) Int. Cl.: C08F 10/00, C08F 4/623

(54) **Geträgerte Metallocen-Katalysatorsysteme**
Supported metallocene catalyst system
Système catalytique à base de métallocène sur support

(30) Priorität: 07.09.1994 DE 4431838
(43) Veröffentlichungstag der Anmeldung: 13.03.1996
(73) Patentinhaber: BASF Aktiengesellschaft, 67063 Ludwigshafen (DE)
(72) Erfinder: Lynch, John, Dr., D-67590 Monsheim (DE); Fischer, David, Dr., D-67161 Gönnheim (DE); Langhauser Franz, Dr., D-67098 Bad Dürkheim (DE); Görtz, Hans-Helmut, Dr., D-67251 Freinsheim (DE); Kerth, Jürgen, Dr., D-67316 Carlsberg (DE); Schweier, Günther, Dr., D-67159 Friedelsheim (DE)

(56) Entgegenhaltungen:
- EP-A- 0 500 944
- EP-A- 0 573 120
- WO-A-95/00526
- DIE MAKROMOLEKULARE CHEMIE, RAPID COMMUNICATIONS, Bd. 14, Nr. 2, Februar 1993 Seiten 109-114, XP 000334497 CHIEN JAMES C W 'Olefin copolymerization...'

## Beschreibung

Die vorliegende Erfindung betrifft geträgerte Katalysatorsysteme, erhältlich durch
a) Aufbringen einer Mischung aus
   A) mindestens einem Metallocenkomplex der allgemeinen Formel I 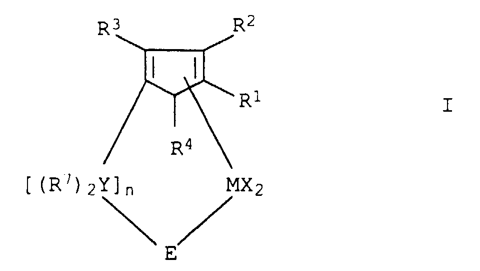 in der die Substituenten folgende Bedeutung haben:
      - M: Titan, Zirkonium, Hafnium, Vanadium, Niob oder Tantal,
      - X: Fluor, Chlor, Brom, Iod, Wasserstoff, C₁- bis C₁₀-Alkyl, C₆- bis C₁₅-Aryl oder -OR⁵,
      wobei R⁵
      C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
      - R¹ bis R⁴: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R⁶)₃ mit
      - R⁶: C₁- bis C₁₀-Alkyl, C₆- bis C₁₅-Aryl oder C₃- bis C₁₀-Cycloalkyl,
      - Y: Silicium, Germanium, Zinn oder Kohlenstoff,
      - R⁷: Wasserstoff, C₁- bis C₁₀-Alkyl, C₃- bis C₁₀-Cycloalkyl oder C₆- bis C₁₅-Aryl,
      - n: die Zahlen 1, 2, 3 oder 4
      und
      - E: -O-, -S-, 〉NR⁸ oder 〉PR⁸ mit
      - R⁸: C₁- bis C₁₀-Alkyl, C₃- bis C₁₀-Cycloalkyl, C₆- bis C₁₅-Aryl, Alkylaryl oder Si(R⁹)₃ mit
      - R⁹: C₁- bis C₁₀-Alkyl, C₈- bis C₁₀-Cycloalkyl, C₆- bis C₁₅-Aryl oder Alkylaryl
      und
   B) mindestens einer Metallverbindung der allgemeinen Formel II

      M¹(R¹⁰)ₘ(X¹)ₒ II

      in der
      - M¹: ein Alkali-, Erdalkalimetall oder ein Metall der III. Hauptgruppe des Periodensystems bedeutet,
      - R¹⁰: Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
      - X¹: Fluor, Chlor, Brom oder Jod,
      - m: eine ganze Zahl von 1 bis 3,
      und
      - o: eine ganze Zahl von 0 bis 2, wobei die Summe m+o der Wertigkeit von M¹ entspricht auf einen Träger, der gegebenenfalls mit mindestens einer Metallverbindung der allgemeinen Formel III

      M²(R¹¹)ₚ(X²)_{q} III

      in der
      - M²: ein Alkali-, Erdalkalimetall oder ein Metall der III. Hauptgruppe des Periodensystems bedeutet,
      - R¹¹: Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
      - X²: Fluor, Chlor, Brom oder Jod,
      - p: eine ganze Zahl von 1 bis 3,
      und
      - q: eine ganze Zahl von 0 bis 2, wobei die Summe p+q der Wertigkeit von M² entspricht
      vorbehandelt sein kann
      und
   b) anschließender Aktivierung durch Umsetzung mit einer Lösung oder Suspension einer metalloceniumionenbildenden Verbindung.

Weiterhin betrifft die Erfindung Verfahren zur Herstellung derartiger geträgerter Katalysatorsysteme, deren Verwendung zur Herstellung von Polyolefinen sowie Verfahren zur Herstellung von Polyolefinen mit Hilfe dieser geträgerten Katalysatorsysteme.

Homogene Metallocen-Katalysatoren haben in den letzten Jahren wohldefinierte Poly-1-olefine mit enger Molekulargewichtsverteilung und hoher chemischer Einheitlichkeit zugänglich gemacht. Eine industrielle Nutzung erfordert in vielen Fällen jedoch eine Heterogenisierung dieser Katalysatoren, so daß eine einfache Handhabbarkeit des Katalysators und eine effektive Morphologiekontrolle des Produktes gewährleistet sind. Geträgerte Metallocen-Katalysatoren sind an sich bekannt. So beschreibt die US-A 5,227,440 solche Systeme, bei denen SiO₂ mit einem Aluminoxan umgesetzt wird, so daß ein aluminoxanbeladener Träger entsteht.

Auf diesen Träger wird das Metallocen aufgebracht, wobei ein aktiver Katalysator entsteht.

Aus der WO 94/03506 ist die Herstellung eines geträgerten, kationischen Metallocen-Katalysators durch Aufbringen der Reaktionsmischung eines Dialkylmetallocens mit einer ionischen Verbindung, die als Kation eine Brönsted-Säure und als Anion ein nichtkoordinierendes Gegenion wie Tetrakis(pentafluorphenyl)borat besitzt, auf einen anorganischen Träger bekannt. Auch hierbei wird ein aktiver Katalysator erhalten.

Analog beschreibt die WO 94/07928 die Herstellung eines aktiven, geträgerten Katalysators durch Aufbringen eines Dialkylmonocyclopentadienyltitan-Komplexes auf einen aluminoxan-vorbehandelten Träger und Aktivierung mittels Tris(pentafluorphenyl)boran.

EP-A-0 500 944 beschreibt geträgerte Katalysatorsystems von Dicyclopentadienyl-Metallocenkomplexen und organometallischen Verbindungen, wobei anschließend eine Aktivierung mit einer metalloceniumonenbildenden Verbindung durchgeführt wird.

Solche schon aktive Katalysatoren führen leicht zu Problemen bei der Dosierung des Katalysators in den Reaktor.

Vorteilhaft ist daher ein noch inaktiver Katalysator, der erst zu einem späteren Zeitpunkt, beispielsweise bei der Dosierung oder auch erst im Reaktor, aktiviert werden kann.

Aufgabe der vorliegenden Erfindung war es daher, geträgerte Katalysatorsysteme zur Verfügung zu stellen, die die genannten Nachteile nicht aufweisen, die insbesondere zu einem beliebigen Zeitpunkt aktivierbar sind und wobei das angewandte Verfahren nicht auf gut lösliche Metallocene beschränkt ist. Weiterhin soll das eingesetzte Metallocen zu einem großen Teil auf dem Träger fixiert werden.

Demgemäß wurden die eingangs definierten geträgerten Katalysatorsysteme gefunden.

Weiterhin wurden Verfahren zur Herstellung derartiger geträgerter Katalysatorsysteme, deren Verwendung zur Herstellung von Polyolefinen sowie Verfahren zur Herstellung von Polyolefinen mit Hilfe dieser geträgerten Katalysatorsysteme gefunden.

Die erfindungsgemäßen geträgerten Katalysatorsysteme sind dadurch erhältlich, daß in einer ersten Stufe a) eine Mischung aus einem Metallocenkomplex der allgemeinen Formel I und einer Metallverbindung der allgemeinen Formel II auf einen Träger aufgebracht werden.

Als Träger werden vorzugsweise feinteilige Feststoffe eingesetzt, deren Teilchendurchmesser im Bereich von 1 bis 200 µm liegen, insbesondere 30 bis 70 µm. Es können sowohl anorganische als auch organische Trägermaterialien eingesetzt werden, wobei die anorganischen bevorzugt sind.

Geeignete Trägermaterialien sind beispielsweise Kieselgele, bevorzugt solche der Formel SiO₂ · a Al₂O₃, worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace.

Andere anorganische Verbindungen wie Al₂O₃ oder MgCl₂ oder diese Verbindungen enthaltende Mischungen können ebenfalls als Trägermaterialien eingesetzt werden.

Von den organischen Trägermaterialien sind insbesondere feinteilige Polyolefine wie Polypropylen und Polyethylen zu nennen.

Die Trägermaterialien können direkt eingesetzt werden oder sie können mit mindestens einer Metallverbindung der allgemeinen Formel III vorbehandelt sein.

Von den Metallverbindungen der allgemeinen Formel III

M²(R¹¹)ₚ(X²)_{q} III

sind diejenigen bevorzugt, in denen
- M²: Li, Na, K, Mg oder Al bedeutet,
- R¹¹: C₁- bis C₆-Alkyl, insbesondere C₁- bis C₄-Alkyl
und
- X²: Chlor.

Besonders bevorzugt sind diejenigen Metallverbindungen III, bei denen q Null ist, insbesondere Magnesiumalkyle und Aluminiumalkyle wie Mg(n-Butyl)₂ und Al(i-Butyl)₃. Sind in einer Verbindung mehrere Reste R¹⁰ bzw. X² vorhanden, so können diese auch jeweils verschieden sein.

Vorzugsweise wird die Metallverbindung der allgemeinen Formel III als Lösung zu einer Suspension des Träges gegeben. Als Lösungs- bzw. Suspensionsmittel sind insbesondere Kohlenwasserstoffe wie Heptan geeignet. Die Menge an Metallverbindung III kann in weiten Grenzen variieren, besonders geeignet sind 0 bis 75 Gew.-% pro g Träger. Die Temperaturen, Reaktionszeiten und Drücke sind an sich unkritisch, bevorzugt sind Temperaturen von 0 bis 80°C, 0,1 bis 48 Stunden und 0,5 bis 2,0 bar.

Es hat sich als geeignet erwiesen, nach der Trägervorbehandlung die überschüssige Metallverbindung III durch Auswaschen, beispielsweise mit Kohlenwasserstoffen wie Pentan oder Hexan, zu entfernen und den Träger zu trocknen.

Auf den Träger - vorbehandelt oder nicht - wird nun die Mischung aus Metallocenkomplex I und Metallverbindung II aufgebracht.

Von den Metallocenkomplexen der allgemeinen Formel I sind diejenigen bevorzugt, in denen
- M: Titan, Zirkonium oder Hafnium bedeutet,
- X: Chlor,
- R¹ bis R⁴: Wasserstoff, C₁- bis C₄-Alkyl oder wobei zwei benachbarte Reste R² und R³ gemeinsam für 4 bis 12 C-Atome aufweisende cyclische Gruppen stehen,
- Y: für Silicium oder Kohlenstoff und
- E: für 〉NR⁸ stehen.

Die Reste X können in einem Metallocenkomplex auch verschieden sein, vorzugsweise sind sie jedoch gleich.

Die Herstellung der Metallocenkomplex I ist beispielsweise in der WO 93/08199 beschrieben.

Von den Metallverbindungen II

M¹(R¹⁰)ₘ(X¹)ₒ II

sind diejenigen bevorzugt, in denen
- M¹: Li, Mg oder Al bedeutet,
- R¹⁰: C₁- bis C₆-Alkyl, insbesondere C₁- bis C₄-Alkyl
und
- X¹: Chlor.

Besonders bevorzugt sind Metallverbindungen II, bei denen o Null ist, insbesondere Magnesiumalkyle und Aluminiumalkyle wie Mg(n-Butyl)₂ und Al(i-Butyl)₃. Sind in einer Verbindung mehrere Reste R¹⁰ und X¹ vorhanden, so können diese auch jeweils verschieden sein.

Sind die Trägermateralien vorbehandelt worden, so können die Metallverbindungen II von den Metallverbindungen III verschieden sein, bevorzugt sind sie jedoch gleich.

Das Aufbringen der Mischung aus Metallocenkomplex I und Metallverbindung II auf den Träger geht vorzugsweise so vonstatten, daß der Metallocenkomplex I in einem inerten Lösungsmittel, vorzugsweise in aromatischen Kohlenwasserstoffen wie Toluol, gelöst oder suspendiert wird, mit der Metallverbindung II, die vorzugsweise ebenfalls gelöst ist, beispielsweise in Heptan, umgesetzt wird und dann der Träger zugegeben wird.

Das molare Verhältnis an Metallocenkomplex I zu Metallverbindung II beträgt 100:1 bis 10⁻⁴:1, vorzugsweise 1:1 bis 10⁻²:1. Die Menge an Träger zu Metallocenkomplex I beträgt vorzugsweise 10 g:1 µmol bis 10⁻² g:1 µmol.

Sowohl das Versetzen des Metallocenkomplexes I mit der Metallverbindung II als auch die Zugabe des Trägers ist an sich unkritisch, bevorzugt arbeitet man bei Temperaturen von 0 bis 60°C über einen Zeitraum von 0,1 bis 6 Stunden bei Drücken von 0,5 bis 2,0 bar.

Nach dem Aufbringen der Mischung aus Metallocenkomplex I und Metallverbindung II auf den Träger wird i.a. das Lösungsmittel entfernt und der Feststoff getrocknet, der für sich keine nennenswerte Polymerisationsaktivität zeigt. Dieser Feststoff kann nun in einer weiteren Stufe b) zu einem beliebigen Zeitpunkt durch Umsetzung mit einer Lösung oder Suspension einer metalloceniumionenbildenden Verbindung aktiviert werden.

Geeignete metalloceniumionenbildende Verbindungen sind insbesondere starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel IV

M³X³X⁴X⁵ IV

bevorzugt, in der
- M³: ein Element der III. Hauptgruppe des Periodensystems bedeutet, insbesondere B, Al oder Ga, vorzugsweise B,
- X³, X⁴ und X⁵: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel IV, in der X³, X⁴ und X⁵ gleich sind, vorzugsweise Tris(pentafluorphenyl)boran.

Als ionische Verbindungen mit lewissauren Kationen sind Verbindungen der allgemeinen Formel V

[(A^{a+})Q₁Q₂...Q_{z}]^{d+} V

geeignet, in denen
- A: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht,
- z: für ganze Zahlen von 0 bis 5
- d: der Differenz a - z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen.

Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Da die Aktivierung zu einem beliebigen Zeitpunkt, d.h. vor, bei oder nach der Dosierung des geträgerten Katalysatorsystems in den Reaktor, erfolgen kann, richten sich die Aktivierungsbedingungen nach diesem Zeitpunkt, sind aber an sich unkritisch. Die Menge an metalloceniumionenbildenden Verbindungen beträgt bevorzugt 0,1 bis 100 Äquivalente, bezogen auf den Metallocenkomplex I.

Mit Hilfe dieser erfindungsgemäßen geträgerten Katalysatorsysteme lassen sich Polyolefine, insbesondere Polymerisate von Alk-1-enen herstellen. Darunter werden Homo- und Copolymerisate von C₂- bis C₁₀-Alk-1-enen verstanden, wobei als Monomere vorzugsweise Ethylen, Propylen, But-1-en, Pent-1-en und Hex-1-en verwendet werden.

Aber auch Cycloolefine oder höhere Alk-1-ene sowie generell Alkene lassen sich als Monomere zur Homo- oder Copolymerisation einsetzen.

Die Herstellung der Polymerisate kann in den üblichen für die Polymerisation von Alkenen verwendeten Reaktoren entweder diskontinuierlich oder bevorzugt kontinuierlich durchgeführt werden. Geeignete Reaktoren sind u.a. kontinuierlich betriebene Schleifenreaktoren oder Rührkessel, wobei man gegebenenfalls auch eine Reihe von mehreren hintereinander geschalteten Rührkesseln verwenden kann oder auch Hochdruckautoklaven oder Hochdruckrohrreaktoren.

Die Polymerisationsbedingungen sind an sich unkritisch, Drücke von 0,5 bis 3500 bar, vorzugsweise 10 bis 50 bar und Temperaturen von -60°C bis +200°C haben sich als geeignet erwiesen.

Polymerisationsreaktionen mit Hilfe der erfindungsgemäßen Katalysatorsysteme lassen sich in der Gasphase, in einer Suspension und in inerten Lösungsmitteln durchführen. Als Suspensions- bzw. Lösungsmittel eignen sich Kohlenwasserstoffe, bevorzugt C₄- bis C₁₀-Alkane.

Die mittlere Molmasse der gebildeten Polymerisate kann mit den in der Polymerisationstechnik üblichen Methoden gesteuert werden, beispielsweise durch Zufuhr von Reglern wie Wasserstoff, oder durch Veränderung der Reaktionstemperaturen. Durch Senkung der Reaktionstemperaturen lassen sich Polymerisate mit erhöhten mittleren Molmassen herstellen.

Die erfindungsgemäßen geträgerten Katalysatorsysteme zeichnen sich dadurch aus, daß sie zu einem beliebigen Zeitpunkt aktivierbar sind, daß das eingesetzte Metallocen zu einem großen Teil auf dem Träger fixiert wird und daß das Herstellverfahren nicht auf gut lösliche Metallocene beschränkt ist.

### Beispiele

### Beispiel 1

Aufbringen einer Mischung aus
Dimethylsilandiyl(N-tert.butylamido)(η⁵-2,3,4,5-tetramethylcyclopentadienyl)titandichlorid (Ia) und Al(i-Butyl)₃ auf einen vorbehandelten anorganischen Träger

### Beispiel 1.1

### Trägervorbehandlung

20 g SiO₂ (SG332 d. Fa. Grace; Mittlerer Durchmesser: 50 µm; 12 h bei 100°C im Vakuum getrocknet) wurden in 200 ml trockenem Heptan suspendiert. Bei Raumtemperatur wurden 56 mmol Al(i-Butyl)₃ (als 2-molare Lösung in Heptan) innerhalb von 30 Minuten zugetropft, wobei die Temperatur auf 45 bis 50°C anstieg. Anschließend wurde über Nacht nachgerührt, der Feststoff abfiltriert und je zweimal mit 30 ml Hexan und 30 ml Pentan gewaschen. Schließlich wurde im Ölpumpenvakuum bis zur Gewichtskonstanz getrocknet.

### Beispiel 1.2

### Aufbringen der Mischung aus Metallocen I und Metallverbindung II 141 µmol (50 mg) Ia

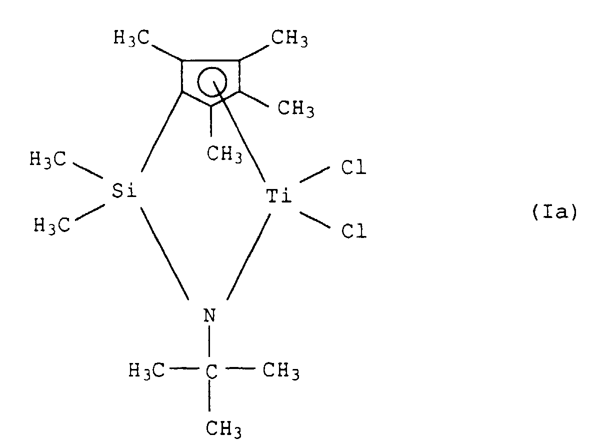

wurden in 50 ml absolutem Toluol suspendiert. Nach Zugabe von 5 mmol Al(i-Butyl)₃ (2-molare Lösung in Heptan) wurde die erhaltene Lösung 10 Minuten gerührt. Dann wurden 5 g des unter 1.1 hergestellten Trägers langsam zugegeben und die erhaltene Suspension 60 Minuten nachgerührt. Danach wurde das Lösungsmittel im Vakuum abgezogen und der feste Rückstand wurde im Ölpumpenvakuum getrocknet, bis ein gut rieselfähiges Pulver zurückblieb.

### Beispiel 2

### Herstellung von Polyethylen (PE) in Suspension mit Tris(pentafluorphenyl)boran als metalloceniumionenbildende Verbindung

350 mg des in Beispiel 1 hergestellten Trägerkatalysators wurden in 1000 ml absolutem Toluol, dem 2 mmol Al(i-Butyl)₃ (als 2-molare Lösung in Heptan) zugesetzt waren, suspendiert. Die Suspension wurde unter Einleitung von Ethen (1 bar) auf 70°C erwärmt und 12,5 mg (0,025 mmol) Tris(pentafluorphenyl)boran, gelöst in 5 ml absolutem Toluol, wurden langsam zugegeben. Bereits nach Zugabe von 1 ml wurde eine deutliche Ethenaufnahme beobachtet. Die Polymerisation wurde nach 60 Minuten abgebrochen, weil der Ansatz nicht mehr rührbar war. Die Aufarbeitung lieferte 10 g PE mit [η] = 6,5 dl/g (gemessen nach DIN 53 728, Teil 4).

### Vergleichsbeispiele 1 und 2

### Vergleichsbeispiel 1

3,7 mg (10,4 µmol) Ia wurden in 1000 ml absolutem Toluol gelöst. Nach Zusatz von 4 mmol Al(i-Butyl)₃ (als 2-molare Lösung in Heptan) wurde die Lösung unter Einleitung von Ethen (1 bar) auf 70°C erwärmt. Dann wurde über einen Tropfrichter eine Lösung von 25 mg (49 µmol) Tris(pentafluorphenyl)boran, gelöst in 10 ml absolutem Toluol, langsam zugegeben. Bereits nach Zugabe von 4 ml dieser Lösung wurde eine deutliche Ethenaufnahme beobachtet, die schließlich etwa 6 l/h erreichte. Nach einer Polymerisationsdauer von 60 Minuten war der Ansatz nicht mehr rührbar und der Versuch wurde abgebrochen. Die Aufarbeitung lieferte 10 g PE mit [η] = 4,1 dl/g (gemessen nach DIN 53 728, Teil 4).

### Vergleichsbeispiel 2

Vergleichsbeispiel 1 wurde wiederholt, wobei anstelle von 4 mmol Al(i-Butyl)₃ nur 2 mmol eingesetzt wurden. Hierbei trat keine erkennbare Reaktion auf.

## Patentansprüche

1. Geträgerte Katalysatorsysteme, erhältlich durch
a) Aufbringen einer Mischung aus
A) mindestens einem Metallocenkomplex der allgemeinen Formel I 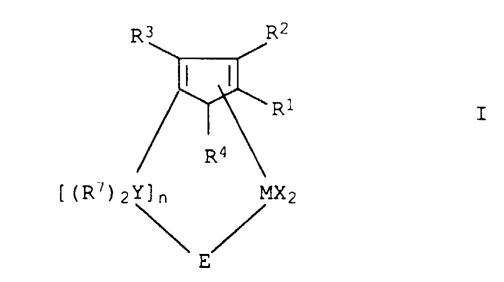 in der die Substituenten folgende Bedeutung haben:
M Titan, Zirkonium, Hafnium, Vanadium, Niob oder Tantal,
X Fluor, Chlor, Brom, Iod, Wasserstoff, C₁- bis C₁₀-Alkyl, C₆- bis C₁₅-Aryl oder -OR⁵,
wobei R⁵
C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
R¹ bis R⁴ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R⁶)₃ mit
R⁶ C₁- bis C₁₀-Alkyl, C₆- bis C₁₅-Aryl oder C₃- bis C₁₀-Cycloalkyl,
Y Silicium, Germanium, Zinn oder Kohlenstoff,
R⁷ Wasserstoff, C₁- bis C₁₀-Alkyl, C₃- bis C₁₀-Cycloalkyl oder C₆- bis C₁₅-Aryl,
n die Zahlen 1, 2, 3 oder 4
und
E -O-, -S-, 〉NR⁸ oder 〉PR⁸ mit
R⁸ C₁- bis C₁₀-Alkyl, C₃- bis C₁₀-Cycloalkyl, C₆- bis C₁₅-Aryl, Alkylaryl oder Si(R⁹)₃ mit
R⁹ C₁- bis C₁₀-Alkyl, C₈- bis C₁₀-Cycloalkyl, C₆- bis C₁₅-Aryl oder Alkylaryl
und
B) mindestens einer Metallverbindung der allgemeinen Formel II
M¹(R¹⁰)ₘ(X¹)ₒ II
in der
M¹ ein Alkali-, Erdalkalimetall oder ein Metall der III. Hauptgruppe des Periodensystems bedeutet,
R¹⁰ Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
X¹ Fluor, Chlor, Brom oder Jod,
m eine ganze Zahl von 1 bis 3,
und
o eine ganze Zahl von 0 bis 2, wobei die Summe m+o der Wertigkeit von M¹ entspricht auf einen Träger, der gegebenenfalls mit mindestens einer Metallverbindung der allgemeinen Formel III
M²(R¹¹)ₚ(X²)_{q} III
in der
M² ein Alkali-, Erdalkalimetall oder ein Metall der III. Hauptgruppe des Periodensystems bedeutet,
R¹¹ Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
X² Fluor, Chlor, Brom oder Jod,
p eine ganze Zahl von 1 bis 3,
und
q eine ganze Zahl von 0 bis 2, wobei die Summe p+q der Wertigkeit von M² entspricht
vorbehandelt sein kann
und
b) anschließender Aktivierung durch Umsetzung mit einer Lösung oder Suspension einer metalloceniumionenbildenden Verbindung.

2. Geträgerte Katalysatorsysteme nach Anspruch 1, dadurch gekennzeichnet, daß als Träger ein Feststoff mit einer Teilchengröße von 1 bis 200 µm verwendet wird.

3. Geträgerte Katalysatorsysteme nach den Ansprüchen 1 bis 2, dadurch gekennzeichnet, daß als metalloceniumionenbildende Verbindung eine starke, neutrale Lewissäure eingesetzt wird.

4. Geträgerte Katalysatorsysteme nach den Ansprüchen 1 bis 3, dadurch gekennzeichnet, daß als starke, neutrale Lewissäure Verbindungen der allgemeinen Formel IV
M³X³X⁴X⁵ IV
in der
M³ ein Element der III. Hauptgruppe des Periodensystems bedeutet,
X³, X⁴ und X⁵ für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen
eingesetzt werden.

5. Geträgerte Katalysatorsysteme nach den Ansprüchen 1 bis 2, dadurch gekennzeichnet, daß als metalloceniumionenbildende Verbindung eine ionische Verbindung mit lewissaurem Kation eingesetzt wird.

6. Geträgerte Katalysatorsysteme nach den Ansprüchen 1 bis 2, dadurch gekennzeichnet, daß als metalloceniumionenbildende Verbindung eine ionische Verbindung mit einer Brönsted-Säure als Kation eingesetzt wird.

7. Verfahren zur Herstellung eines geträgerten Katalysatorsystems gemäß den Verfahrensbedingungen von Anspruch 1.

8. Verwendung von geträgerten Katalysatorsystemen gemäß den Ansprüchen 1 bis 6 zur Herstellung von Polyolefinen.

9. Verfahren zur Herstellung von Polyolefinen bei Drücken von 0,5 bis 3500 bar und Temperaturen von -60 bis +200°C in Gegenwart eines Katalysatorsystems, dadurch gekennzeichnet, daß man geträgerte Katalysatorsysteme gemäß den Ansprüchen 1 bis 6 verwendet.

10. Verfahren zur Herstellung von Polyolefinen nach Anspruch 9, dadurch gekennzeichnet, daß die Aktivierung b) des Katalysatorsystems unmittelbar vor, bei oder nach der Dosierung des Katalysatorsystems in den Reaktor erfolgt.

## Claims

1. A supported catalyst system obtainable by
a) application of a mixture of
A) at least one metallocene complex of the formula I 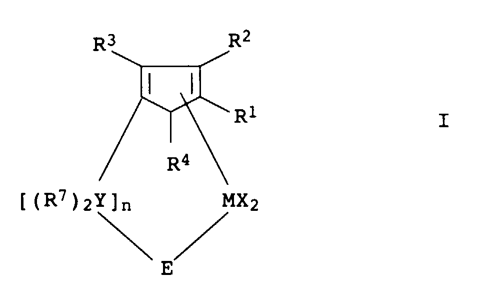 where
M is titanium, zirconium, hafnium, vanadium, niobium or tantalum,
X is fluorine, chlorine, bromine, iodine, hydrogen, C₁-C₁₀-alkyl, C₆-C₁₅-aryl or -OR⁵,
R⁵ is C₁-C₁₀-alkyl, C₆-C₁₅-aryl, alkylaryl, arylalkyl, fluoroalkyl or fluoroaryl, where each alkyl radical is of 1 to 10 carbon atoms and each aryl radical is of 6 to 20 carbon atoms,
R¹ to R⁴ are each hydrogen, C₁-C₁₀-alkyl, 5-membered to 7-membered cycloalkyl which in turn may carry a C₁-C₁₀-alkyl as a substituent, C₆-C₁₅-aryl or arylalkyl, where two neighboring radicals together may furthermore form a cyclic group of 4 to 15 carbon atoms, or Si(R⁶)₃,
R⁶ is C₁-C₁₀-alkyl, C₆-C₁₅-aryl or C₃-C₁₀-cycloalkyl,
Y is silicon, germanium, tin or carbon,
R⁷ is hydrogen, C₁-C₁₀-alkyl, C₃-C₁₀-cycloalkyl or C₆-C₁₅-aryl,
n is 1, 2, 3 or 4,
E is -O-, -S-, 〉NR⁸ or 〉PR⁸,
R⁸ is C₁-C₁₀-alkyl, C₃-C₁₀-cycloalkyl, C₆-C₁₅-aryl, alkylaryl or Si(R⁹)₃ and
R⁹ is C₁-C₁₀-alkyl, C₈-C₁₀-cycloalkyl, C₆-C₁₅-aryl, or alkylaryl,
and
B) at least one metal compound of the formula II
M¹(R¹⁰)ₘ(X¹)ₒ II
where
M¹ is an alkali metal or alkaline earth metal or a metal of main group III of the Periodic Table,
R¹⁰ is hydrogen, C₁-C₁₀-alkyl, C₆-C₁₅-aryl, alkylaryl or arylalkyl, where each alkyl radical is of 1 to 10 carbon atoms and each aryl radical is of 6 to 20 carbon atoms,
X¹ is fluorine, chlorine, bromine or iodine,
m is an integer from 1 to 3,
and
o is an integer from 0 to 2, the sum m+o corresponding to the valency of M¹, to a carrier which, if required, may have been pretreated with at least one metal compound of the formula III
M²(R¹¹)ₚ(X²)_{q} III
where
M² is an alkali metal or alkaline earth metal or a metal of main group III of the Periodic Table,
R¹¹ is hydrogen, C₁-C₁₀-alkyl, C₆-C₁₅-aryl, alkylaryl or arylalkyl, where each alkyl radical is of 1 to 10 carbon atoms and each aryl radical is of 6 to 20 carbon atoms,
X² is fluorine, chlorine, bromine or iodine,
p is an integer from 1 to 3,
and
q is an integer from 0 to 2, where the sum p+q corresponds to the valency of M²,
and
b) subsequent activation by reaction with a solution or suspension of a compound forming metallocenium ions.

2. The supported catalyst system as claimed in claim 1, wherein the carrier used is a solid having a particle size of from 1 to 200 µm.

3. The supported catalyst system as claimed in claim 1 or 2, wherein a strong, neutral Lewis acid is used as the compound forming metallocenium ions.

4. The supported catalyst system as claimed in any of claims 1 to 3, wherein the strong, neutral Lewis acid used is a compound of the formula IV
M³X³X⁴X⁵ IV
where
M³ is an element of main group III of the Periodic Table and
X³, X⁴ and X⁵ are each hydrogen, C₁-C₁₀-alkyl, C₆-C₁₅-aryl, alkylaryl, arylalkyl, haloalkyl or haloaryl, where each alkyl radical is of 1 to 10 carbon atoms and each aryl radical is of 6 to 20 carbon atoms, or fluorine, chlorine, bromine or iodine.

5. The supported catalyst system as claimed in claim 1 or 2, wherein an ionic compound having a Lewis acid cation is used as the compound forming metallocenium ions.

6. The supported catalyst system as claimed in claim 1 or 2, wherein an ionic compound having a Brönsted acid as a cation is used as the compound forming metallocenium ions.

7. A process for the preparation of a supported catalyst system according to the process conditions of claim 1.

8. Use of a supported catalyst system as claimed in any of claims 1 to 6 for the preparation of polyolefins.

9. A process for the preparation of polyolefins at from 0.5 to 3500 bar and from -60 to +200°C in the presence of a catalyst system, wherein a supported catalyst system as claimed in any of claims 1 to 6 is used.

10. A process for the preparation of a polyolefin as claimed in claim 9, wherein the activation b) of the catalyst system is carried out immediately before, during or after the metering of the catalyst system into the reactor.

## Revendications

1. Systèmes catalytiques supportés, que l'on peut obtenir par
a) application d'un mélange constitué de
A) au moins un complexe de métallocène de la formule générale I 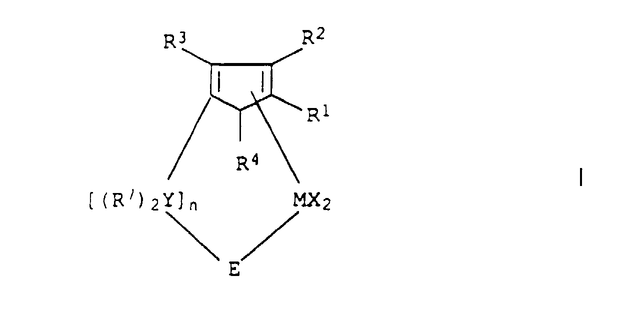 dans laquelle les substituants ont les significations qui suivent :
M représente le titane, le zirconium, l'hafnium, le vanadium, le niobium ou le tantale,
X représente le fluor, le chlore, le brome, l'iode, l'hydrogène, des radicaux alkyle en C₁ à c₁₀, aryle en C₆ à c₁₅, ou -OR⁵,
où R⁵ représente un radical alkyle en C₁ à c₁₀, aryle en C₆ à c₁₅, alkylaryle, arylalkyle, fluoralkyle ou fluoraryle avec à chaque fois de 1 à 10 atomes de carbone dans le reste alkyle et de 6 à 20 atomes de carbone, dans le reste aryle,
R1 à R⁴ représentent chacun un atome d'hydrogène, un radical alkyle C₁ à c₁₀, cycloalkyle pentagonal à heptagonal, qui peut, à son tour, porter un radical alkyle en C₁ à c₁₀, à titre de substituant, un radical arylalkyle ou aryle en C₆ à C₁₅, où éventuellement aussi deux restes voisins peuvent représenter en commun des radicaux cycliques présentant de 4 à 15 atomes de carbone, ou Si(R⁶)₃ où
R⁶ représente un groupe alkyle en C₁ à c₁₀, aryle en C₆ à c₁₅, ou cycloalkyle en C₁ à c₁₀,
Y représente le silicium, le germanium, l'étain ou le carbone,
R⁷ représente un atome d'hydrogène, un radical alkyle en C₁ à c₁₀, cycloalkyle en C₃ à c₁₀, ou aryle en C₆ à c₁₅,
n est égal à 1, 2, 3 ou 4
et
E représente -O-, -S-, >NR⁸ ou >PR⁸ où
R⁸ représente un groupe alkyle en C₁ à c₁₀, cycloalkyle en C₃ à c₁₀, ou aryle en C₆ à c₁₅, alkylaryle ou Si(R⁹)₃ où
R⁹ représente un radical alkyle en C₁ à c₁₀, cycloalkyle en C₈ à c₁₀, alkylaryle ou aryle en C₆ à c₁₅
et
B) au moins un composé d'un métal de la formule générale II
M¹(R¹⁰)ₘ(X¹)ₒ II
dans laquelle
M¹ représente un métal alcalin, un métal alcalino-terreux, ou un métal du troisième groupe principal du système périodique,
R¹⁰ représente un atome d'hydrogène, un radical alkyle C₁ à c₁₀, alkylaryle ou aryle en C₆ à c₁₅, ou arylalkyle avec à chaque fois de 1 à 10 atomes de carbone dans le reste alkyle et de 6 à 20 atomes de carbone dans le reste aryle,
X¹ représente le fluor, le chlore, le brome ou l'iode,
m représente un nombre entier dont la valeur varie de 1 à 3
et
o représente un nombre entier dont la valeur varie de 0 à 2, où la somme m+o correspond à la valence de M¹,
sur un support qui peut éventuellement au préalable être traité par au moins un composé d'un métal de la formule générale III
M²(R¹¹)ₚ(X²)_{q} III
dans laquelle
M² représente un métal alcalin, un métal alcalino-terreux, ou un métal du troisième groupe principal du système périodique,
R¹¹ représente un atome d'hydrogène, radical alkyle en C₁ à c₁₀, alkylaryle ou aryle en C₆ à c₁₅, ou aralkyle avec à chaque fois de 1 à 10 atomes de carbone dans le reste alkyle et de 6 à 20 atomes de carbone dans le reste aryle,
X² représente le fluor, le chlore, le brome ou l'iode,
p représente un nombre entier dont la valeur varie de 1 à 3
et
q représente un nombre entier dont la valeur varie de 0 à 2, où la somme p+q correspond à la valence de M²
et
b) activation subséquente par réaction avec une solution ou une suspension d'un composé formant des ions métallocénium.

2. Systèmes catalytiques supportés suivant la revendication 1, caractérisés en ce que l'on utilise, à titre de support, un corps solides d'un calibre des particules de 1 à 200 µm.

3. Systèmes catalytiques supportés suivant l'une quelconque des revendications 1 et 2, caractérisés en ce que l'on utilise, à titre de composé formant des ions métallocénium, un acide de Lewis neutre, fort.

4. Systèmes catalytiques supportés suivant l'une quelconque des revendications 1 à 3, caractérisés en ce que, à titre d'acide de Lewis neutre, fort, on utilise des composés de la formule générale IV
M³X³X⁴X⁵ IV
dans laquelle
M³ représente un élément du troisième groupe principal du système périodique,
X³X⁴X⁵ représentent chacun un atome d'hydrogène, un radical alkyle en C₁ à C₁₀, un radical aryle en C₆ à C₁₅, alkylaryle, arylalkyle, halogénoalkyle ou halogénoaryle avec à chaque fois de 1 à 10 atomes de carbone dans le reste alkyle et de 6 à 20 atomes de carbone dans le reste aryle, ou un atome de fluor, de chlore, de brome ou d'iode.

5. Systèmes catalytiques supportés suivant l'une quelconque des revendications 1 et 2, caractérisés en ce que, à titre de composé formant des ions métallocénium, on utilise un composé ionique avec un cation à acide de Lewis.

6. Systèmes catalytiques supportés suivant l'une quelconque des revendications 1 et 2, caractérisés en ce que, à titre de composé formant des ions métallocénium, on utilise un composé ionique avec un acide de Bronsted, à titre de cation.

7. Procédé de préparation d'un système catalytique supporté suivant les conditions opératoires de la revendication 1.

8. Utilisation de systèmes catalytiques supportés suivant l'une quelconque des revendications 1 à 6, pour la préparation de polyoléfines.

9. Procédé de préparation de polyoléfines sous des pressions de 0,5 à 3500 bars et à des températures de -60 à +200°C, en présence d'un système catalytique, caractérisé en ce que l'on utilise des systèmes catalytiques supportés suivant l'une quelconque des revendications 1 à 6.

10. Procédé de préparation de polyoléfines suivant la revendication 9, caractérisé en ce que l'on entreprend l'activation b) du système catalytique immédiatement avant, pendant ou après l'introduction dosée du système catalytique dans le réacteur.
